Europäisches Patentamt

European Patent Office

Office européen des brevets

(11) Numéro de publication: **0 337 834**
**A2**

## (12) DEMANDE DE BREVET EUROPEEN

(21) Numéro de dépôt: **89400798.8**

(22) Date de dépôt: **21.03.89**

(51) Int. Cl.⁴: **F 23 L 15/04**

(30) Priorité: **05.04.88 FR 8804445**

(43) Date de publication de la demande:
**18.10.89 Bulletin 89/42**

(84) Etats contractants désignés:
**AT BE CH DE ES GB GR IT LI LU NL SE**

(71) Demandeur: **STEIN HEURTEY**
**B.P. 69**
**F-91002 Evry Cedex (FR)**

(72) Inventeur: **Braud, Yves**
**18 rue de Penthièvre**
**F-78310 Maurepas (FR)**

(74) Mandataire: **Armengaud Ainé, Alain**
**Cabinet ARMENGAUD AINE 3 Avenue Bugeaud**
**F-75116 Paris (FR)**

(54) **Réchauffeur d'air pour atmosphères corrosives.**

(57) Réchauffeur d'air résistant à la corrosion, utilisant des produits de combustion, provenant d'équipements thermiques, contenant des agents polluants et corrosifs tels que notamment des composés oxydés du soufre et des sels de sodium et de vanadium, qui comprend au moins un faisceau de tubes, parcourus par l'air à réchauffer, qui sont placés sur le trajet des fumées corrosives, avant leur trajet dans l'atmosphère, lesdites fumées corrosives circulant à contre-courant de l'air à réchauffer parcourant les tubes, ce réchauffeur étant caractérisé en ce qu'il comporte un faisceau tubulaire de protection (24, 24'), placé en amont dudit faisceau de tubes (18, 16), ce faisceau de protection étant alimenté par un courant constant d'air froid circulant dans le même sens que les fumées, ce débit d'air froid et la surface d'échange dudit faisceau de protection étant choisis de manière que la température des premiers tubes (18) du faisceau tubulaire du réchauffeur (10) soit toujours inférieure à la température critique de corrosion par le sodium et le vanadium, et en ce que le débit constant d'air sortant dudit faisceau de protection est ensuite redistribué à l'entrée ou à la sortie du faisceau tubulaire du réchauffeur (10), en fonction des régimes de marche, de façon que la température de peau des tubes de ce faisceau tubulaire soit toujours légèrement supérieure à la température du point de rosée acide des fumées.

Description

## RECHAUFFEUR D'AIR POUR ATMOSPHERES CORROSIVES

La présente invention est relative à un réchauffeur d'air pour chaudières, fours et autres équipements thermiques similaires, dans lesquels les produits de la combustion chauds et corrosifs sont utilisés pour réchauffer de l'air froid.

On sait que l'utilisation dans de tels équipements thermiques de combustibles fossiles, en particulier liquides, génère des fumées qui comportent des quantités plus ou moins importantes d'agents polluants et corrosifs tels que notamment des composés oxydés du soufre et des sels de sodium et de vanadium. Il en résulte que des réchauffeurs d'air constitués de faisceaux de tubes placés sur le trajet des gaz de combustion corrosifs avant leur rejet à l'atmosphère, sont soumis d'une part à des risques de corrosion à haute température par les sels de sodium/vanadium et d'autre part à des risques de corrosion à basse température par les condensations acides dues à la présence des oxydes de soufre.

On connaît (voir notamment FR-A-2 454 598 - 2 545 197) des réchauffeurs d'air à faisceaux tubulaires résistant à la corrosion provoquée par la condensation des vapeurs acides des fumées dans lesquels on soumet l'air arrivant dans les premiers tubes du faisceau à un préchauffage à haute température, de manière que la température des tubes soit maintenue à une valeur supérieure au point de rosée acide des fumées. Cependant, ces solutions connues n'empêchent pas la corrosion due aux sels de sodium et de vanadium étant donné que le préchauffage de l'air circulant dans les premiers tubes de faisceau tubulaire soumis à l'action des fumées corrosives maintient ces premiers tubes à une température supérieure à la température critique de corrosion par le sodium/vanadium.

On comprend que pour éviter, on à tout le moins réduire, simultanément les risques de corrosion par les composés oxydés du soufre et par les sels de sodium et de vanadium, il est impératif de maintenir la peau des tubes du réchauffeur en contact avec les fumées, d'une part à une température inférieure à la température critique de corrosion par le sodium/vanadium et d'autre part à une température supérieure au point de rosée acide des fumées.

Afin de tenter de résoudre ce problème, on a réalisé des réchauffeurs d'air à faisceaux tubulaires comportant un faisceau d'attaque constitué de tubes résistant à la corrosion et alimentés par de l'air à une température et un débit tels que la température de peau de ces tubes reste inférieure à la température critique de corrosion par les sels de sodium et de vanadium. Par ailleurs, en vue de réduire les risques de corrosion par les condensations acides dues aux oxydes de soufre, les dernières passes, dans le sens de l'écoulement des fumées, peuvent être réalisés de façon antiméthodique (c'est à dire que les deux fluides : fumée et air à réchauffer, circulent dans le même sens), ce qui permet d'éviter une température trop basse des peaux de tubes.

On comprend que, selon cette solution, la conception des réchauffeurs d'air est figée dès le départ et il n'est plus possible ensuite de les adapter aux différentes conditions de marche habituellement rencontrées dans les équipements situés en amont. Cette conception figée constitue donc un inconvénient majeur car non seulement elle entraîne des baisses de rendement possibles mais encore elle ne permet pas de supprimer totalement les risques de corrosion dans les cas extrêmes de marche maximale et minimale.

La présente invention se propose en conséquence de pallier les inconvénients des solutions antérieures décrites ci-dessus en apportant un réchauffeur d'air qui comporte des moyens permettant d'adapter en permanence la température des tubes du faisceau tubulaire les plus soumis au risque de corrosion.

En conséquence, l'invention concerne un réchauffeur d'air résistant à la corrosion, utilisant des produits de combustion, provenant d'équipements thermiques, contenant des agents polluants et corrosifs tels que notamment des composés oxydés du soufre et des sels de sodium et de vanadium, qui comprend au moins un faisceau de tubes, parcourus par l'air à réchauffer, qui sont placés sur le trajet des fumées corrosives, avant leur rejet dans l'atmosphère, lesdites fumées corrosives circulant à contrecourant de l'air à réchauffer parcourant les tubes, ce réchauffeur étant caractérisé en ce qu'il comporte un faisceau tubulaire de protection, placé en amont dudit faisceau de tubes, ce faisceau de protection étant alimenté par un courant constant d'air froid circulant dans le même sens que les fumées, ce débit d'air froid et la surface d'échange dudit faisceau de protection étant choisis de manière que la température des premiers tubes du faisceau tubulaire du réchauffeur soit toujours inférieure à la température critique de corrosion par le sodium et le vanadium, et en ce que le débit constant d'air sortant dudit faisceau de protection est ensuite redistribué à l'entrée ou à la sortie du faisceau tubulaire du réchauffeur, en fonction des régimes de marche, de façon que la température de peau des tubes de ce faisceau tubulaire soit toujours légèrement supérieure à la température du point de rosée acide des fumées.

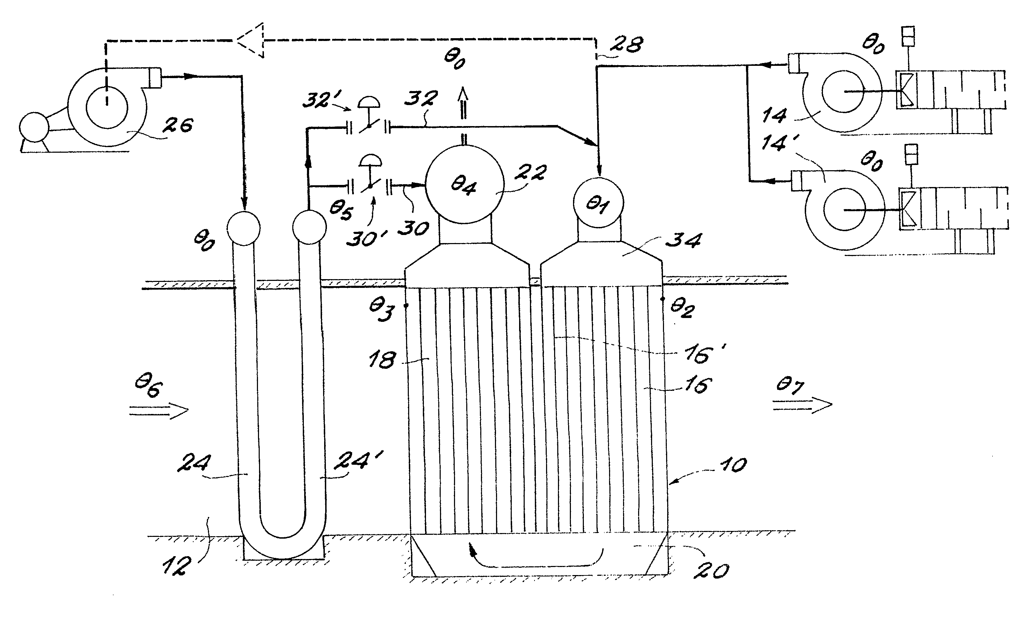

D'autres caractéristiques et avantages de la présente invention ressortiront de la description faite ci-après en référence au dessin annexé dont la figure unique est une vue schématique représentant un exemple de réalisation non limitatif d'un réchauffeur d'air selon l'invention.

En se référant au dessin, on voit que dans cet exemple de réalisation, le réchauffeur d'air désigné dans son ensemble par la référence 10, comprend deux faisceaux tubulaires 16, 18, de type méthodique, c'est à dire que l'air à réchauffer circule dans leurs tubes à contre courant des gaz de combustion corrosifs constituant le caloporteur. Ces faisceaux tubulaires 16, 18 sont positionnés dans le carneau 12 où circulent les produits de combustion corrosifs, perpendiculairement aux tubes des faisceaux 16, 18.

Les faisceaux tubulaires 16, 18 sont alimentés en air à une température $\theta_0$ par l'intermédiaire d'un ou de plusieurs ventilateurs tels que 14, 14', l'air circulant du premier faisceau du premier faisceau 16 vers le second faisceau 18, en passant par une boîte de distribution inférieure 20, avant d'être évacué vers le four de l'installation thermique (non représenté) par un collecteur 22.

Selon l'invention, on dispose dans le carneau 12, en amont des faisceaux tubulaires 16, 18, du réchauffeur 10, un faisceau de protection constitué ici par deux tubes 24, 24', alimentés en air à la température $\theta_0$ par un ventilateur 26. Ce ventilateur 26 peut, soit aspirer l'air directement de l'atmosphère, soit être placé en dérivation (conduite en trait interrompu 28) sur le circuit d'alimentation du réchauffeur 10 par les ventilateurs 14, 14'. La pression de refoulement du ventilateur 26 est nettement supérieure à la pression régnant à l'entrée du réchauffeur 10.

En raison du faible débit relatif du faisceau de protection 24, 24', on peut adopter une perte de charge et par conséquent une vitesse supérieure à la vitesse habituelle en vue de favoriser les échanges tubes/air et afin de mieux imposer la température de peau des tubes des faisceaux du réchauffeur 10 qui sont les plus sollicités par les fumées chaudes, en privilégiant notablement l'échange convectif air/tubes par rapport à l'échange tubes/fumées.

Ainsi qu'on le voit sur la figure, le faisceau de protection 24, 24' est placé en amont de la dernière zone du réchauffeur méthodique 10, c'est à dire devant les premiers tubes du faisceau 18 en ce réchauffeur et il est calculé en débit et en surface de manière à abaisser la température des fumées pour qu'en régime maximal de fonctionnement des équipements thermiques situés en amont (non représentés sur la figure), la température $\theta_3$ des premiers tubes du faisceau 18 du réchauffeur, soit toujours inférieure à la température critique de corrosion par le sodium et le vanadium, cette température critique étant fonction de la qualité métallurgique des tubes et de la composition des fumées.

En régime normal de fonctionnement, l'air chaud sort du faisceau de protection 24, 24' à une température $\theta_5$ et il est dirigé vers le collecteur 22, grâce à la conduite 30 sur laquelle est montée une vanne 30' qui alimente ensuite le four, l'ensemble du réchauffeur fonctionnant avec un rendement optimal.

Lors d'un fonctionnement en faible régime des équipements thermiques situés en amont du réchauffeur, à surface constante d'échange correspond un abaissement de la température des fumées tel que la température $\theta_2$ des derniers tubes du faisceau 16 du réchauffeur risque de devenir inférieure à la température du point de rosée acide, ce qui soumettrait les tubes du réchauffeur 10 à un risque de corrosion par les condensations des composés oxydés du soufre, contenus dans les fumées, ce que veut précisément éviter l'invention. En conséquence, on dévie en totalité ou en partie le débit d'air chaud à la température $\theta_5$ provenant du

faisceau de protection 24, 24' vers la zone aval du collecteur 34 amenant l'air froid à température $\theta_0$ au réchauffeur 10. On prévoit donc selon l'invention une conduite de dérivation 32, une vanne de régulation 32' pour amener l'air chaud à température $\theta_5$ vers le collecteur 34. Ainsi, l'air délivré au faisceau tubulaire 16 du réchauffeur 10 est préchauffé à une température $\theta_1 > \theta_0$, cette température $\theta_1$ étant telle que la température $\theta_2$ de peau des tubes du réchauffeur 10 est toujours supérieure à la température du point de rosée acide des fumées.

Compte tenu de la pression dynamique sur le circuit 32, il est possible de privilégier la ou les dernières nappes de tubes du réchauffeur 10 en réalisant le collecteur 34, de manière qu'il comporte des ajutages situés au droit des dernières nappes 16' des tubes du faisceau 16 du réchauffeur alimenté par le collecteur 34.

La différence de pression entre la conduite 32 et la pression de refoulement des ventilateurs 14, 14' se traduit par une impulsion de jets d'air, issus du collecteur 34, suffisante pour forcer cet air au travers des tubes précités du réchauffeur 10. Il est possible d'obtenir un effet similaire en subdivisant le collecteur d'entrée 34 du réchauffeur 10, en deux ou plus sous-collecteurs, ceux qui correspondent aux dernières nappes de tubes 16' étant alors alimentés de façon préférentielle par la conduite 32 en fonction des températures respectives $\theta_2$ à l'entrée du réchauffeur 10, et $\theta_7$, température de rejet à l'atmosphère des fumées ayant traversé le réchauffeur.

De la lecture de la description qui précède, on comprend que l'invention permet :
- d'une part d'assurer une température $\theta_1$ à tous les régimes telle que la température de peau $\theta_2$ des tubes du faisceau 16 du réchauffeur 10 soit toujours légèrement supérieures à la température du point de rosée acide des fumées et
- d'autre part de maintenir la température $\theta_3$ des premières nappes de tubes du faisceau 18 du réchauffeur 10, à une valeur qui est toujours inférieure à la température critique de corrosion par le sodium/vanadium.

L'invention permet donc de réaliser un réchauffeur d'air qui élimine les risques de corrosion à haute température par les sels de sodium/vanadium et à basse température par les condensations acides dues à la présence de composés oxydés de soufre dans les fumées.

Il demeure bien entendu que la présente invention n'est pas limitée aux exemples de réalisation décrits ci-dessus mais qu'elle en englobe toutes les variantes.

**Revendications**

1- Réchauffeur d'air résistant à la corrosion, utilisant des produits de combustion, provenant d'équipements thermiques, contenant des agents polluants et corrosifs tels que notamment des composés oxydés du soufre et des sels de sodium et de vanadium, qui comprend au moins un faisceau de tubes, parcourus par l'air à réchauffer, qui sont placés sur le trajet des fumées corrosives, avant leur rejet dans l'atmosphère, lesdites fumées corrosives circulant à contre-courant de l'air à réchauffer parcourant les tubes, ce réchauffeur étant caractérisé en ce qu'il comporte un faisceau tubulaire de protection (24, 24'), placé en amont dudit faisceau de tubes (18, 16), ce faisceau de protection étant alimenté par un courant constant d'air froid circulant dans le même sens que les fumées, ce débit d'air froid et la surface d'échange dudit faisceau de protection étant choisis de manière que la température des premiers tubes (18) du faisceau tubulaire du réchauffeur (10) soit toujours inférieure à la température critique de corrosion par le sodium et le vanadium, et en ce que le débit constant d'air sortant dudit faisceau de protection est ensuite redistribué à l'entrée ou à la sortie du faisceau tubulaire du réchauffeur (10), en fonction des régimes de marche, de façon que la température du peau des tubes de ce faisceau tubulaire soit toujours légèrement supérieure à la température du point de rosée acide des fumées.

2- Réchauffeur d'air selon la revendication 1, caractérisé en ce que le faisceau de protection (24, 24') est alimenté en air à une pression qui est nettement supérieure à la pression régnant à l'entrée du faisceau tubulaire dudit réchauffeur (10).

3- Réchauffeur d'air selon l'une des revendications précédentes, caractérisé en ce que le faisceau de protection (24, 24') est alimenté par ventilateur (26) aspirant l'air, soit directement de l'atmosphère, soit à partir d'une conduite de dérivation (28), sur le circuit d'alimentation du réchauffeur (10).

4- Réchauffeur d'air selon l'une quelconque des revendications précédentes, caractérisé en ce qu'en fonction du régime de fonctionnement désiré, l'air chaud provenant du faisceau de protection (24, 24') est soit envoyé dans le collecteur (22) d'air chaud alimentant le four, l'ensemble du réchauffeur fonctionnant avec un rendement optimal, soit dévié, en totalité ou en partie, vers la zone aval du collecteur (34) d'entrée d'air froid dans le réchauffeur (10).

5- Réchauffeur d'air selon la revendication 4, caractérisé en ce que le collecteur (34) alimentant en air froid le réchauffeur (10) est muni d'ajutages situés au droit des dernières nappes (16') du tube du réchauffeur (10) alimentées par ce collecteur.

6- Réchauffeur d'air selon la revendication 4, caractérisé en ce que le collecteur (34) alimentant le réchauffeur (10) est subdivisé en au moins deux sous-collecteurs, ceux correspondant aux dernières nappes (16') des tubes du réchauffeur étant alors alimentés de façon préférentielle par la conduite (32) amenant l'air réchauffé dans le faisceau de protection (24, 24'), en fonction de la température ($\theta_0$) d'entrée de l'air dans le réchauffeur (10) et de la température ($\theta_7$) de rejet des fumées dans l'atmosphère, après passage au travers du réchauffeur (10).

01471